# EUROPÄISCHE PATENTANMELDUNG

(11) **EP 2 367 248 A2**
(43) Veröffentlichungstag der Anmeldung: **21.09.2011**
(21) Anmeldenummer: 11158041.1
(22) Anmeldetag: 14.03.2011
(51) Int. Cl.: H02G 3/04, H02G 3/10

(54) **Medienversorgungsvorrichtung zur Bereitstellung und Entsorgung von Medien**

(30) Priorität: 15.03.2010 DE 102010015979
(71) Anmelder: Waldner Labor- und Schuleinrichtungen GmbH, 01097 Dresden (DE)
(72) Erfinder: Keibach, Dieter, 88267, Vogt (DE)
(74) Vertreter: Wilhelms · Kilian & Partner Patentanwälte

(57) **Zusammenfassung**

Die Erfindung betrifft eine Medienversorgungsvorrichtung (10), insbesondere zur Bereitstellung von Medien für Schuleinrichtungen, mit einer Medienversorgungseinrichtung (12) zur Bereitstellung von Medien, die zwischen einer ersten Stellung und einer sich von der ersten Stellung unterscheidenden zweiten Stellung verfahrbar gelagert ist. Erfindungsgemäß ist vorgesehen, dass die Medienversorgungseinrichtung (12) derart verfahrbar gelagert ist, dass sie bei Verlagerung zwischen der ersten Stellung und der zweiten Stellung eine überlagerte Bewegung aus einer Translation und einer Rotation durchführt. Darüber hinaus ist erfindungsgemäß vorgesehen, dass eine Gestelleinrichtung (16), mit der die Medienversorgungseinrichtung (12) gekoppelt ist, entlang einer Längsrichtung einer Medienverteilereinrichtung (28) der Medienversorgungsvorrichtung (10) verfahrbar ist. Ferner kann eine Medienentnahmeeinrichtung (26) entlang einer Rahmeneinrichtung (24) der Medienversorgungseinrichtung (12) teleskopartig verstellbar sein kann.

## Beschreibung

Die Erfindung betrifft eine Medienversorgungsvorrichtung, insbesondere eine Medienversorgungsvorrichtung zur Bereitstellung/Entsorgung von Medien für Schuleinrichtungen, mit einer Medienversorgungseinrichtung zur Bereitstellung/Entsorgung von Medien, die zwischen einer ersten Stellung und einer sich von der ersten Stellung unterscheidenden zweiten Stellung verfahrbar gelagert ist.

Aus dem Stand der Technik sind insbesondere Medienversorgungsvorrichtungen bekannt, die eine Medienverteilereinrichtung, wie beispielsweise einen Medienflügel, und damit gekoppelte Medienentnahmeeminchtungen, beispielsweise Mediensäulen, Medienampeln und dergleichen, aufweisen,

Um derartige Medienversorgungsvorrichtungen möglichst flexibel auszubilden, ist aus dem Stand der Technik bekannt, die Medienversorgungseinrichtung zur Bereitstellung und Entsorgung der Medien mit derartigen Medienflügeln rotatorisch verschwenkbar zu koppeln. Dementsprechend kann die Medienversorgungseinrichtung beispielsweise zwischen einer eingefahrenen bzw. horizontalen ersten Stellung und einer sich von der ersten Stellung unterscheidenden ausgefahrenen bzw. vertikalen zweiten Stellung zur Bereitstellung der Medien rotatorisch verschwenkt werden. Daher kann die Medienversorgungseinrichtung einerseits bei Bedarf in die vertikale Stellung zur Bereitstellung bzw, Entnahme und/oder Entsorgung der Medien, wie beispielsweise gasförmige oder flüssige Medien, Strom, Mittel zur Durchführung eines Datenaustauschs, etc., übergeführt werden. Andererseits, falls keinerlei Medien zur Verfügung gestellt und/oder entsorgt werden sollen, kann die Medienversorgungseinnchtung erneut in deren horizontale Stellung gefahren werden.

Eine derartige gattungsgemäße Medienversorgungsvorrichtung ist beispielsweise aus der Druckschrift DE 10107912 A1 bekannt. Bei dieser dem Stand der Technik angehörenden Medienversorgungsvorrichtung ist die Medienversorgungseinrichtung rotatorisch verschwenkbar von der horizontalen Stellung in die vertikale Stellung zur Bereitstellung bzw. Entnahme von Medien verfahrbar. Jedoch beschreibt diese dem Stand der Technik angehörende Medienversorgungseinrichtung eine rein rotatorische Bahnkurve, was insbesondere unter engen Platzbedingungen, beispielsweise kleinen Klassenzimmern in Schulen, erheblichen Raum für die Verschwenkbewegung beanspruchen kann. Insbesondere in kleinen mit Schuleinrichtungen wie Stühlen, Tischen, Laboreinrichtungen, etc. voll gestellten Zimmern kann ein derart erhöhter Platzbedarf für die Verschwenkung der Medieneinrichtung problematisch werden und beispielsweise mit Umräumarbeiten von derartigen Schuleinrichtungen zur Platzbeschaffung für die Verschwenkung verbunden sein.

Der Erfindung liegt daher die Aufgabe zugrunde, die gattungsgemäßen Medsenversorgungsvorrichtungen derart weiterzubilden, dass die Piatzerfordernisse für das Verfahren der Medienversorgungseinrichtung verringert werden können,

Diese Aufgabe wird durch die Merkmale des unabhängigen Anspruchs gelöst. Vorteilhafte Ausgestaltungen und Weiterbildungen der Erfindung ergeben sich aus den abhängigen Ansprüchen.

Die erfindungsgemäße Medienversorgungsvorrichtung baut auf dem gattungsgemäßen Stand der Technik dadurch auf, dass die Medienversorgungseinrichtung derart verfahrbar gelagert ist, dass sie bei Verlagerung zwischen der ersten Stellung und der zweiten Stellung eine überlagerte Bewegung aus einer Translation und einer Rotation durchführt. Durch eine Überlagerung der Bewegung der Medienversorgungseinrichtung aus einer Rotation und Translation wird erzielt, dass für das Aus- und Einfahren bzw, für die Überführung der Medienversorgungseinrichtung von der vertikalen Stellung in die horizontale Stellung (und umgekehrt) erheblich weniger Raum für die Verschwenkung der Medienversorgungseinrichtung erforderlich ist, Demzufolge lässt sich die Medienversorgungseinrichtung auch unter äußerst engen Platzbedingungen zwischen der eingefahrenen bzw. horizontalen Stellung und der ausgefahrenen bzw. vertikalen Stellung verfahren.

In diesem Zusammenhang kann die erfindungsgemäße Medienversorgungsvorrichtung in besonders vorteilhafter Weise derart weitergebildet werden, dass die Medienversorgungseinrichtung derart verfahrbar gelagert ist, dass sie bei Verlagerung zwischen der ersten Stellung und der zweiten Stellung zumindest teilweise eine elliptische Bahnkurve beschreibt. Die elliptische Bahnkurve beim Verfahren der Medienversorgungseinrichtung ergibt sich insbesondere durch entsprechende Überlagerung der Rotationsbewegung und Translationsbewegung, Dadurch kann der für die Verlagerung der Medienversorgungseinrichtung erforderliche Raum stark verringert werden.

Weiterhin kann die erfindungsgemäße Medienversorgungsvorrichtung so ausgebildet werden, dass die Medienversorgungseinrichtung über eine Getriebeeinrichtung an einer Gestelleinrichtung verfahrbar gelagert ist. Um die überlagerte Bewegung aus Translationsbewegung und Rotationsbewegung zu bewirken, eignet sich insbesondere eine Getriebeeinrichtung wie beispielsweise ein Führungsgetriebe, durch welches die Medienversorgungseinrichtung zwischen der eingefahrenen bzw. horizontalen ersten Stellung und der ausgefahrenen bzw. vertikalen zweiten Stellung geführt verfahren werden kann.

Darüber hinaus kann die erfindungsgemäße Medienversorgungsvorrichtung derart verwirklicht werden, dass die Getriebeeinrichtung einen ersten Lenker und einen zweiten Lenker umfasst, die jeweils mit einem Ende an der Gestelleinrichtung und einem anderen Ende an der Medienversorgungseinrichtung angelenkt sind. Vorzugsweise ist die Getriebeeinrichtung durch eine Lenkeranordnung aus jeweils zwei Lenkern an jeder Seite der Medienversorgungseinrichtung vorgesehen, die die Medienversorgungseinrichtung entsprechend der elliptischen Bahnkurve führen. Dementsprechend umfasst die Getriebeeinrichtung in dieser bevorzugten Ausgestaltung insgesamt vier Lenker, wobei insbesondere zwei Lenker auf die vorstehend beschriebene Weise linksseitig und zwei Lenker auf die vorstehend beschriebene Weise rechtsseitig in Bezug auf die Medienversorgungseinrichtung bzw. hinsichtlich einer Mittelebene bzw, Symmetrieebene der Medienversorgungseinrichtung vorgesehen sind.

Ferner kann die erfindungsgemäße Medienversorgungsvorrichtung so realisiert werden, dass die Medienversorgungseinrichtung in der ersten Stellung in einer eingefahrenen, vorzugsweise horizontalen, Stellung und in der zweiten Stellung in einer ausgefahrenen, vorzugsweise vertikalen, Stellung angeordnet ist, wobei der erste und zweite Lenker die Medienversorgungeinrichtung auf einer vorbestimmten Bahnkurve führen. Wie vorstehend erwähnt ist, wird die Medienversorgungseinrichtung somit auf der elliptischen Bahnkurve, welche durch die Überlagerung der Translationsbewegung in Verbindung mit der Rotationsbewegung der Medienversorgungseinrichtung erzielt wird, durch die als Führungsgetriebe ausgebildete Getriebeeinrichtung geführt verfahren.

Des Weiteren kann die erfindungsgemäße Medienversorgungsvorrichtung derart ausgestattet werden, dass die Medienversorgungseinrichtung weiterhin über eine Gasdruckfeder mit der Gestelleinrichtung derart verbunden ist, dass die Gasdruckfeder die Medienversorgungsvorrichtung bei Überschreiten einer vorbestimmten Position in die erste Stellung anhand deren Federkraft bewegt. Dadurch wird die Medienversorgungseinrichtung ab einem gewissen Bahnpunkt, insbesondere einem Bahnpunkt der elliptische Bahnkurve, ohne äußere Krafteinwirkung anhand der Federkraft der Gasdruckfeder in die erste Stellung bewegt, weiche der eingefahrenen und horizontalen Stellung der Medienversorgungseinrichtung entspricht.

In diesem Zusammenhang kann die erfindungsgemäße Medienversorgungsvorrichtung so umgesetzt werden, dass die Gasdruckfeder weiterhin mit einem Dämpfungsmechanismus vorgesehen ist. Somit werden ruckartige Bewegungen bzw. auftretende Schwingungen der Medienversorgungseinrichtung, die zu einer Beschädigung beispielsweise der Getriebeeinrichtung führen können, anhand des Dämpfungsmechanismus der Gasdruckfeder gedämpft, um eine Beschädigung der Medienversorgungsvorrichtung möglichst zu vermeiden.

Weiterhin kann die erfindungsgemäße Medienversorgungsvorrichtung derart ausgebildet sein, dass die Medienversorgungseinrichtung weiterhin über eine Zugfeder mit der Gestelleinrichtung derart verbunden ist, dass die Zugfeder die Medienversorgungseinnchtung bei Unterschreiten einer bestimmten Position in die zweite Stellung anhand deren Federkraft bewegt. Dadurch wird die Medienversorgungseinrichtung nach Durchlaufen der vorbestimmten Position in Richtung der ausgefahrenen bzw. vertikalen zweiten Stellung anhand der Federkraft der Zugfeder in die zweite Stellung bewegt, wobei während dieser Bewegung gleichzeitig eine Dämpfung anhand des Dämpfungsmechanismus der Gasdruckfeder zur Verfügung gestellt werden kann. Ebenso kann die Zugfeder aber auch zur Dämpfung der Schwenkbewegung der Medienversorgungsvorrichtung beim Abschwenken der Medienversorgungseinrichtung ausgelegt sein. Insbesondere kann es erforderlich sein, das Gewicht der Medienversorgungseinrichtung beim Abschwenken bzw, beim Verfahren der Medienversorgungseinrichtung in die vertikale bzw, zweite Stellung abzubremsen, Insbesondere in dem Fall, bei dem die Gasdruckfeder die entsprechenden Kräfte nicht alleine abbremsen kann, kann die Zugfeder als Dämpfung der Abschwenkung der Medienversorgungseinrichtung unterstützend zur Gasdruckfeder wirken, indem sie beispielsweise eine Kraft auf die Medienversorgungseinrichtung aufbringt, die ein Drehmoment bewirkt, welches der Bewegung in die vertikale Stellung entgegenwirkt. Ebenso ist denkbar, dass anstelle der Zugfeder eine Druckfeder zur Dämpfung der Abschwenkung der Medienversorgungseinrichtung vorgesehen ist und für diesen Zweck geeignet angeordnet ist. Auch Kombinationen aus beiden Federarten sind denkbar. Weiterhin ist auch denkbar, anstelle einer Zug- oder Druckfeder eine weitere Gasdruckfeder für diesen Zweck einzusetzen. In sämtlichen vorgenannten Fällen wird somit bevorzugt, dass die Gasdruckfeder und entsprechend die Zug-/Druck-/Gasdruckfeder derart ausgelegt sind, dass die Medienversorgungseinrichtung bei Überschreiten einer vorbestimmten Position anhand der durch die Federn aufgebrachten Kräfte in die erste Stellung gedämpft bewegt wird und bei Unterschreiten einer vorbestimmten Position in die zweite Stellung ebenso gedämpft bewegt wird.

Des Weiteren kann die erfindungsgemäße Medienversorgungsvorrichtung so realisiert werden, dass die Gestelleinrichtung von einer Medienverteilereinrichtung in einer Längsrichtung der Medienverteilereinrichtung verfahrbar geführt ist, Dadurch kann die Medienversorgungseinrichtung, beispielsweise bevor diese in ihre ausgefahrene bzw. vertikale zweite Stellung übergeführt wird, entlang der Längsrichtung der Medienverteilereinrichtung, weiche beispielsweise durch einen Medienflügel bzw einen Medienverteiler ausgebildet wird, verfahren werden, wodurch eine erhöhte Flexibilität der Medienversorgungsvorrichtung erzielt wird.

Darüber hinaus kann die erfindungsgemäßeMedienversorgungsvorrichtung so ausgebildet werden, dass eine Arretiereinrichtung vorgesehen ist, die eingerichtet ist, eine Arretierung der Gestelleinrichtung vorzunehmen, um die Verfahrbarkeit der Gestelleinrichtung zu unterbinden, und die Arretierung zu lösen, um die Verfahrbarkeit der Gestelleinrichtung zuzulassen, Beispielsweise kann die Arretiereinrichtung als eine Bremseinheit ausgebildet sein, die über einen an der Entnahmeeinrichtung vorgesehenen Seilzug betätigt werden kann, um die Gestelleinrichtung an einer Stelle an der Führung der Medienverteilereinrichtung zu arretieren oder, um ein Verfahren der Gestelleinrichtung zuzulassen, zu lösen.

In einer bevorzugten Ausführungsform der erfindungsgemäßen Medienversorgungsvorrichtung ist vorgesehen, dass die Medienversorgungseinrichtung eine zwischen der ersten und zweiten Stellung verfahrbar gelagerte Rahmeneinrichtung und eine entlang einer Längsrichtung der Rahmeneinrichtung verfahrbare Medienentnahmeeinrichtung umfasst. Dadurch wird eine noch größere Raumersparnis bei dem Ein-und Ausfahren der Medienversorgungseinrichtung erzielt. Beispielsweise kann bei Überführung der Medienversorgungseinrichtung von der eingefahrenen bzw, horizontalen ersten Stellung in die ausgefahrene bzw. vertikale zweite Stellung die zugehörige Medienentnahmeeinrichtung in einer eingefahrenen Stellung verharren, wobei die Medienentnahmeeinrichtung erst bei Erreichen der zweiten Stellung, vorzugsweise teleskopartig, ausgefahren wird, Ebenso ist denkbar, dass das Ein- und Ausfahren der Medienentnahmeeinrichtung über einen Mechanismus mit dem Bewegungsmechanismus, beispielsweise dem Führungsgetriebe, der Medienversorgungsvorrichtung derart gekoppelt ist, dass die Medienentnahmeeinrichtung quasi automatisch ihre ausgefahrene Stellung erreicht, wenn die Medienversorgungseinrichtung ihre ausgefahrene bzw, vertikale zweite Stellung erreicht (und umgekehrt).

Eine bevorzugte Ausführungform der Erfindung wird nachfolgend anhand der Figuren beispielhaft erläutert.

Es zeigen:
Figur 1 eine Seitenansicht der erfindungsgemäßen Medienversorgungsvorrichtung gemäß einem Ausfuhrungsbeispie! der Erfindung,
Figur 2 eine Frontansicht der erfindungsgemäßen Medienversorgungsvorrichtung von Figur 1,
Figur 3a eine perspektivische Ansicht der erfindungsgemäßen Medienversorgungsvorrichtung von Figur 1,
Figur 3b eine Draufsicht der erfindungsgemäßen Medienversorgungsvorrichtung von Figur 1,
Figur 4 eine Seitenansicht der erfindungsgemäßen Medienversorgungsvorrichtung von Figur 1 in einer teilweise ausgefahrenen Stellung der Medienversorgungseinrichtung,
Figur 5 eine perspektivische Ansicht der erfindungsgemäßen Medienversorgungsvorrichtung von Figur 4 in der teilweise ausgefahrenen Stellung der Medienversorgungseinrichtung,
Figur 6 eine perspektivische Ansicht der erfindungsgemäßen Medienversorgungsvorrichtung von Figur 1 in einer vollständig ausgefahrenen Steigung der Medienversorgungseinrichtung,
Figur 7 eine Seitenansicht der erfindungsgemäßen Medienversorgungsvorrichtung von Figur 6 in der vollständig ausgefahrenen Stellung der Medienversorgungseinrichtung.

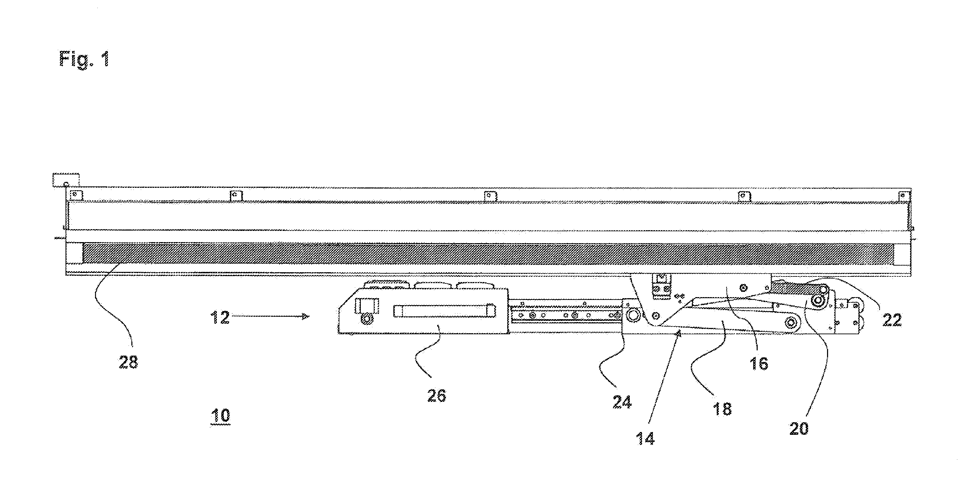

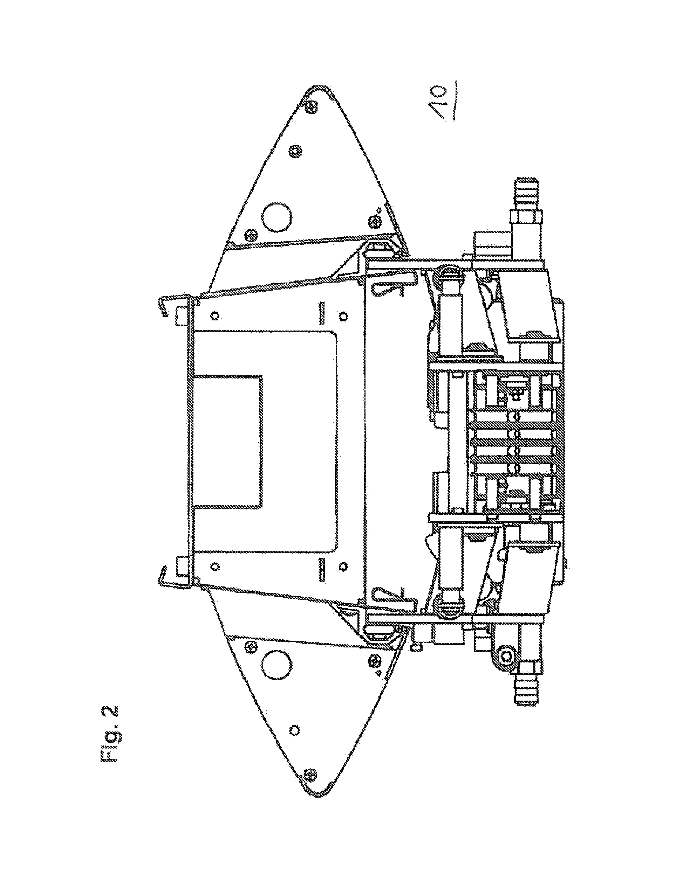

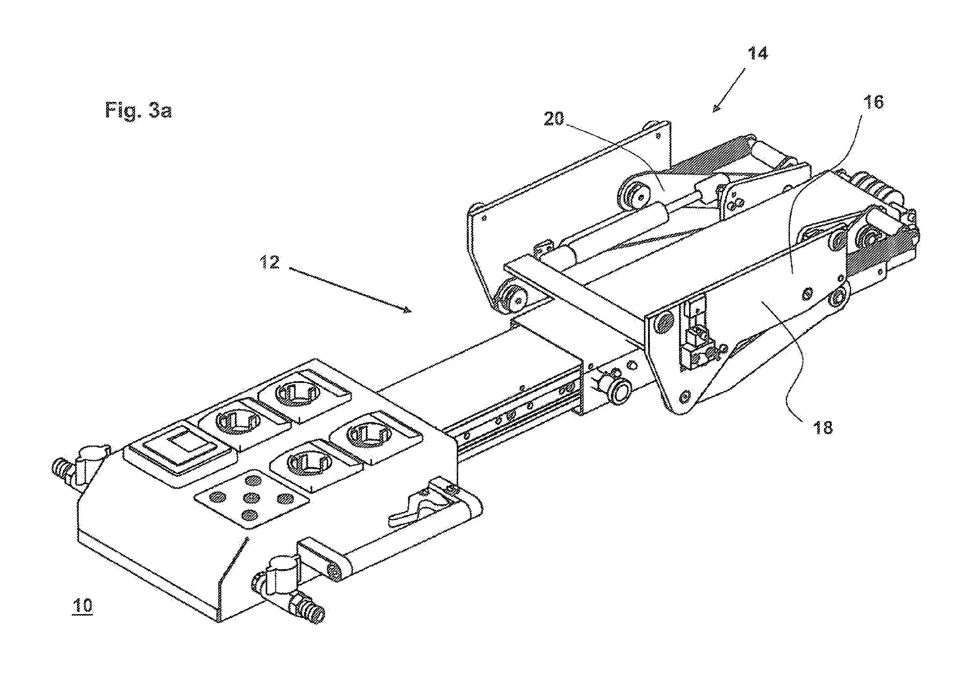

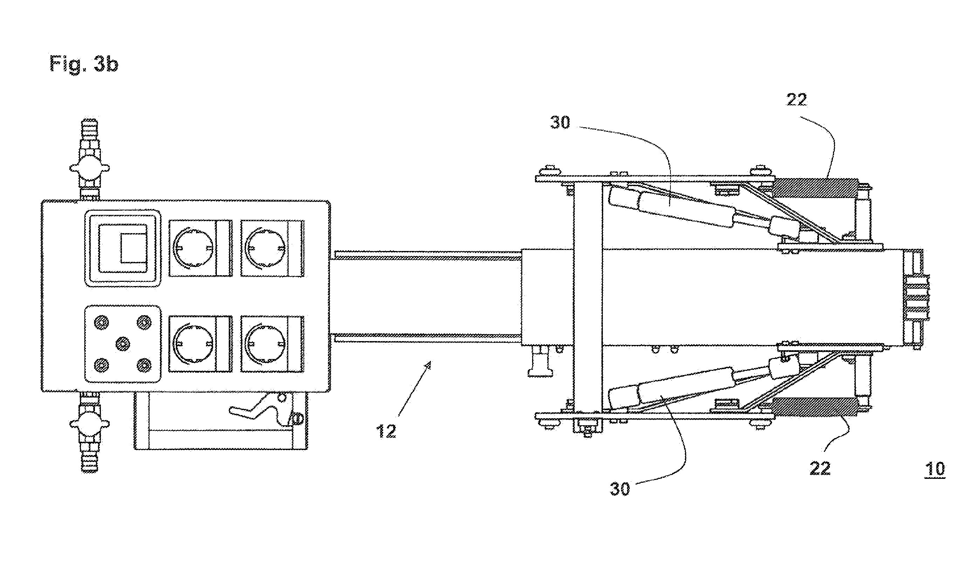

Figur 1 zeigt eine Seitenansicht der erfindungsgemäßen Medienversorgungsvorriciitung 10 gemäß einem Ausführungsbeispiel der Erfindung, wobei Figur 2 eine Frontansicht der erfindungsgemäßen Medienversorgungsvorrichtung 10 von Figur 1 zeigt. Darüber hinaus zeigen Figur 3a eine perspektivische Ansicht der erfindungsgemäßen Medienversorgungsvorrichtung 10 von Figur 1 und Figur 3b eine Draufsicht der erfindungsgemäßen Medienversorgungsvomchtung 10 von Figur 1. Im Zusammenhang mit den Figuren 3a und 3b sind zur besseren Darstellung der nachstehend näher erläuterten Medienversorgungseinrichtung 12 einige Komponenten der Medienversorgungsvorrichtung 10 weggelassen.

Wie in den Figuren 1, 2, 3a und 3b ersichtlich ist, ist eine Medienversorgungsvorrichtung 10 zur Bereitstellung bzw. Entnahme und/oder Entsorgung von Medien für Schuleinrichtungen, beispielsweise für Klassenzimmer bzw. Chemieschulzimmer, vorgesehen, wobei die Medienversorgungsvorrichtung 10 mit einer Medienversorgungseinrichtung 12 zur unmittelbaren Bereitstellung bzw. Entnahme und/oder Entsorgung der entsprechenden Medien vorgesehen ist. Derartige Medien können beispielsweise gasförmige oder flüssige Medien, elektrischer Strom, Daten zur Durchführung eines Datenaustauschs, Medien zur Darstellung von Informationen bzw. Informationsanzeige, etc. sein. Beispielsweise kann die Medienversorgungseinrichtung 12 ausschließlich oder zusätzlich eine Anzeigeeinrichtung, wie zum Beispiel einen Bildschirm, umfassen, um ausschließlich oder zusätzlich Informationen anzeigen zu können. Beispielsweise könnte die Darstellung von Informationen an dem Bildschirm dazu dienen, einem Benutzer Informationen entsprechend seiner Sehkraft vergrößert darzustellen, welche aufgrund seiner Sehkraft außerhalb seines Sichtfeldes liegen, über eine Aufnahmeeinrichtung jedoch vergrößert auf den Bildschirm übertragen werden,

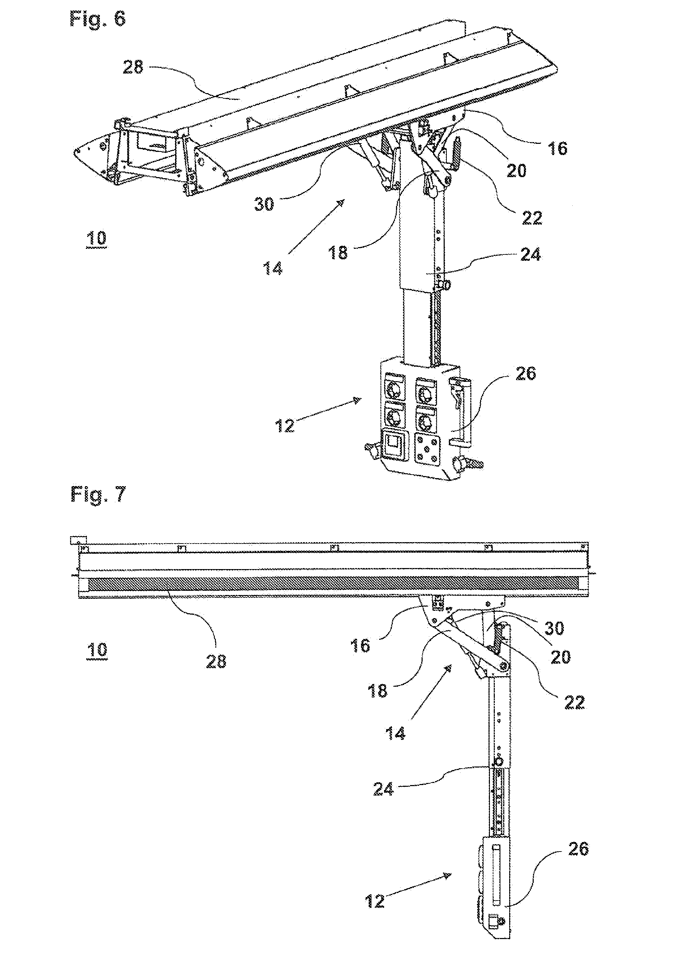

Die Medienversorgungseinrichtung 12 ist in dem in den Figuren 1, 2, 3a und 3b dargestellten Fall in einer waagerechten bzw. eingefahrenen ersten Stellung angeordnet und lässt sich in eine vertikale bzw. ausgefahrene zweite Stellung verfahren bzw. überführen, wie insbesondere aus den Figuren 6 und 7 ersichtlich ist. Insbesondere umfasst die Medienversorgungsemnchtung 12 eine zwischen der ersten und zweiten Stellung verfahrbar gelagerte Rahmeneinrichtung 24 und eine entlang einer Längsrichtung der Rahmeneinrichtung 24 verfahrbar gelagerte Medienentnahmeeinrichtung 26, weiche im dargestellten Fall durch ein Medienentnahmemodul ausgebildet wird. Vorzugsweise ist die Medienentnahmeeinrichtung 26 über eine nicht näher beschriebene Führungseinrichtung gleitend an der Rahmeneinrichtung 24 geführt, so dass die Medienentnahmeeinrichtung 26 in Längsrichtung der Rahmeneinrichtung 24 beweglich gelagert ist.

Zum Verfahren der Medienversorgungseinrichtung 12 zwischen der ersten und zweiten Stellung ist die Medienversorgungseinrichtung 12 über eine nachstehend näher erläuterte Getriebeeinrichtung 14 an einer Gestelleinrichtung 16 verfahrbar gelagert. Im vorliegende Fall ist die Getriebeeinrichtung 14 als ein führungsgetriebe ausgebildet, so dass die Medienversorgungseinrichtung 12 derart verfahrbar gelagert ist, dass sie bei Verlagerung zwischen der eingefahrenen bzw. horizontalen ersten Stellung und der ausgefahrenen bzw. vertikalen zweiten Stellung eine überlagerte Bewegung aus einer Translation und einer Rotation durchführt. Insbesondere beschreibt die Medienversorgungseinrichtung 12 bei der Verlagerung von der ersten Stellung in die zweite Stellung (und umgekehrt) eine elliptische Bahnkurve,

Die Gestelleinrichtung 16 ist wiederum an einer beispielsweise mit einer Raumdecke gekoppelten Medienverteilereinrichtung 28 geführt gelagert, so dass die Gestelleinrichtung 16 in einer Längsrichtung der Medienverteilereinrichtung 28 entlang der Medienverteilereinrichtung 28 verfahrbar ist. Vorzugsweise ist die Gestelleinrichtung 16 über eine federgelagerte Bremseinrichtung bzw, Arretiereinrichtung festellbar bzw. lösbar, so dass die Gestelleinrichtung 16 lediglich dann in horizontaler Richtung bzw. Längsrichtung entlang der Medienverteilereinrichtung 28 verfahrbar ist, sofern die Bremseinrichtung gelöst ist. Zur Betätigung der Bremseinrichtung kann beispielsweise ein Seilzug an der Entnahmeeinrichtung 26 vorgesehen sein, über den die Bremseinrichtung zur Festeren und Lösen der Gestelleinrichtung 16 betätigt werden kann.

Zur Bereitstellung der jeweiligen Medien an vorgesehen Entnahmestellen der Medienentnahmeeinrichtung 26 sind insbesondere nicht näher dargestellte, vorzugsweise flexible Leitungen, Kabel, etc. an der Medienentnahmeeinrichtung 26 vorgesehen und mit Entnahmestellen an der Medienentnahmeeinrichtung 26 gekoppelt. Diese Leitungen, Kabel, etc. erstrecken sich bzw. verlaufen insbesondere von der Medienentnahmeeinrichtung 26 zur Medienverteilereinrichtung 28, die beispielsweise als mit einer Raumdecke gekoppelter Medienflügel ausgebildet ist. Vorzugsweise werden die Leitungen, Kabel, etc. zur Bereitstellung der Medien über eine Einrichtung zum Straffen der Leitungen, Kabel, etc. in Abhängigkeit von der Stellung der Medienversorgungseinrichtung 12, insbesondere der Medienentnahmeeinrichtung 26, stets straff gehalten. Vorzugsweise kann die Einrichtung zum Straffen der Leitungen, Kabel, etc. unter anderem einen Rollenzug oder eine Zugfeder umfassen, welcher/welche die entsprechende Zugkraft zum Straffen der jeweiligen Leitungen, Kabel, etc, in Abhängigkeit von der Stellung der Medienentnahmeeinrichtung 26 zur Verfügung stellt, Dadurch wird insbesondere eine Abscherung der Leitungen, Kabel, etc., weiche durch die Verlagerung der Medienversorgungseinrichtung 12 auftreten könnte, vermieden.

Damit die Getriebeeinrichtung 14 die Medienversorgungseinrichtung 12 entsprechend der vorgenannten elliptischen Bahnkurve führen kann, umfasst die Getriebeeinrichtung 14 einen ersten Lenker 18 und einen zweiten Lenker 20, wobei der erste Lenker 18 und der zweite Lenker 20 jeweils mit ihrem einen Ende mit der Gestelleinrichtung 16 und mit ihrem anderen Ende mit der Medienversorgungseinrichtung 12 drehbar gekoppelt bzw, angelenkt sind. Im dargestellten Fall umfasst die Getriebeeinrichtung 14 für jede Seite der Medienversorgungseinrichtung 12, d.h. links und rechts in Bezug auf eine Mittelebene bzw. Symmetrieebene der Medienversorgungseinrichtung 12, erste und zweite Lenker 18, 20. Demnach umfasst die Lenkeranordnung der Getriebeeinrichtung 14 In diesem Ausführungsbeispiel insgesamt vier Lenker.

Insbesondere ist der erste Lenker 18 an einem ersten Lagerpunkt drehbar an der Gestelleinrichtung 16 angelenkt und an einem zweiten Lagerpunkt an der Medienversorgungseinrichtung 12 drehbar angelenkt, Weiterhin ist der zweite Lenker 20 an einem dritten Lagerpunkt an der Gestelleinrichtung 16 drehbar angelenkt und an einem vierten Lagerpunkt an der Medienversorgungseinrichtung 1.2 drehbar angelenkt, Der erste Lagerpunkt ist dabei von dem dritten Lagerpunkt in einer Längsrichtung der Medienversorgungsemnchtung 12 beabstandet und liegt in Figur 1 um einen vorbestimmten Abstand unterhalb des dritten Lagerpunkts, d.h. in einer Richtung senkrecht zur Längsrichtung zur Medienversorgungseinrichtung 12. Der zweite Lagerpunkt ist in Figur 1. von dem vierten Lagerpunkt in Längsrichtung der Medienversorgungseinrichtung 12 beabstandet, wobei der vierte Lagerpunkt um einen vorbestimmten Abstand oberhalb des zweiten Lagerpunkts in Figur 1 angeordnet ist, d.h. in einer Richtung senkrecht zur Längsrichtung der Medienversorgungseinrichtung 12 von dem zweiten Lagerpunkt beabstandet ist. Darüber hinaus ist der erste Lenker 18 längenmässig größer als der zweite Lenker 20 ausgestaltet. Anhand dieser vorgenanten Lenkeranordnung aus dem ersten Lenker 18 und dem zweiten Lenker 20 ist die Medienversorgungseinrichtung 12 von der ersten Stellung, welche einer eingefahrenen und horizontalen Stellung entspricht, in die zweite Stellung, weiche einer ausgefahrenen und vertikalen Stellung entspricht, überführbar.

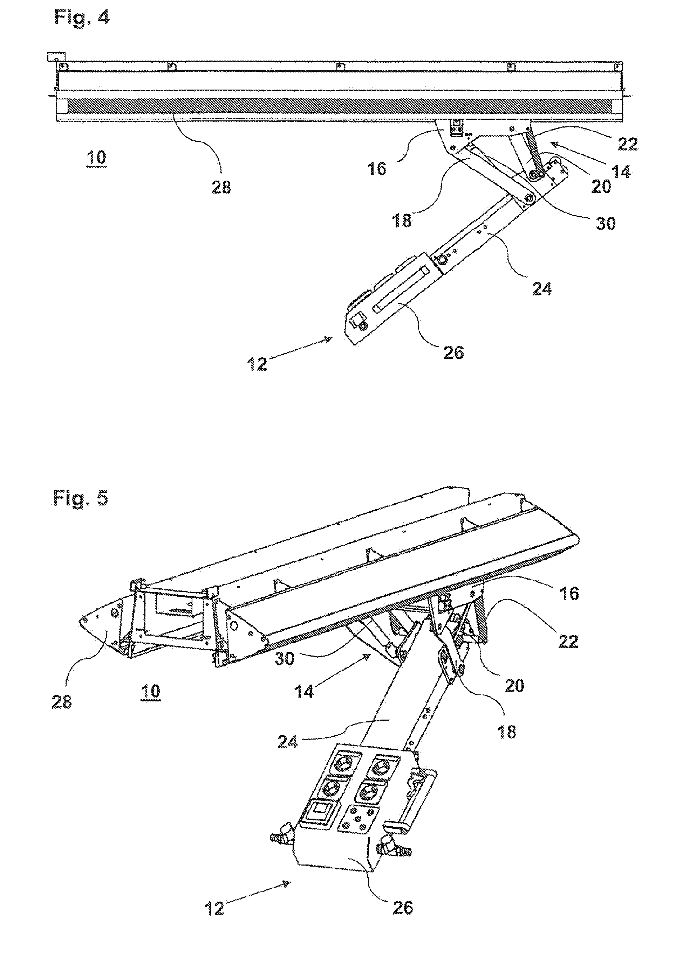

Figur 4 zeigt eine Seitenansicht der erfindungsgemäßen Medienversorgungsvorrichtung 10 von Figur 1 in einer teilweise ausgefahrenen Stellung der Medienversorgungseinrichtung 12, wobei Figur 5 eine perspektivische Ansicht der erfindungsgemäßen Medienversorgungsvorrichtung 10 von Figur 4 in der teilweise ausgefahrenen Stellung der Medienversorgungsemrkhtung 12 zeigt. Darüber hinaus zeigt Figur 6 eine perspektivische Ansicht der erfindungsgemäßen Medienversorgungsvorrichtung 10 von Figur 1 in einer vollständig ausgefahrenen Stellung der Medienversorgungseinrichtung 12 und Figur 7 zeigt eine Seitenansicht der erfindungsgemäßen Medienversorgungsvorrichtung von Figur 6 in der vollständig ausgefahrenen Stellung der Medienversorgungseinrichtung 12. Wie unter anderem aus den Figuren 4 bis 7 deutlich erkennbar ist, umfasst die Medienversorgungsvorrichtung 12 weiterhin eine Gasdruckfeder 30. Die Medienversorgungseinrichtung 12 ist über die Gasdruckfeder 30 mit der Gestelleinrichtung 16 derart verbunden, dass die Gasdruckfeder die Medienversorgungseinrichtung 12 bei Überschreiten einer vorbestimmten Position in die eingefahrene und horizontale erste Stellung anhand deren Federkraft bewegt. Dementsprechend ist die Gasdruckfeder an geeigneten Lagerstellen mit der Gestelleinrichtung 16 und der Medienversorgungseinrichtung 12 gekoppelt, um ab einer vorbestimmten Stellung die Medieriversorgungseinrichtung 12 in die eingefahrene bzw. horizontale erste Stellung überzuführen. In diesem Ausführungsbeispiel umfasst die Gasdruckfeder 30 weiterhin einen nicht dargestellten Dämpfungsmechanismus, um ruckartige Bewegungen der Medienversorgungseinnchtung 12 dämpfen zu können. Wie weiterhin aus den Figuren 4 bis 7 ersichtlich ist, ist darüber hinaus eine Zugfeder 22 vorgesehen, so dass die Medienversorgungseinrichtung 12 über die Zugfeder 22 mit der Gestelleinrichtung 16 gekoppelt ist. Dabei ist die Zugfeder 22 derart mit der Medienversorgungseinrichtung 12 und der Gestelleinrichtung 16 gekoppelt, dass die Medienversorgungseinrichtung 12 bei Unterschreiten einer vorbestimmten Position in die ausgefahrene bzw. vertikale zweite Stellung anhand der Zugfeder 22 bewegt wird. Sowohl die Gasdruckfeder 30 als auch die Zugfeder 22 sind, wie auch im Zusammenhang mit dem ersten und zweiten Lenker 18, 20 vorstehend erläutert ist, jeweils an einer Seite, d.h. links und rechts, an der Medienversorgungsvorrichtung 10 vorgesehen.

Die in der vorstehenden Beschreibung, in den Zeichnungen sowie in den Ansprüchen offenbarten Merkmale der Erfindung können sowohl einzeln als auch in beliebiger Kombination zur verwirklichung der Erfindung beitragen.

### Bezugszeichenliste

- 10: Medienversorgungsvorrichtung
- 12: Medienversorgungseinrichtung
- 14: Getriebeeinrichtung
- 16: Gestelleinrichtung
- 18: erster Lenker
- 20: zweiter Lenker
- 22: Zugfeder
- 24: Rahmeneinrichtung
- 26: Medienentnahmeeinrichtung
- 28: Medienverteilereinrichtung
- 30: Gasdruckfeder

## Patentansprüche

1. Medienversorgungsvorrichtung (10), insbesondere zur Bereitstellung/Entsorgung von Medien für Schuleinrichtungen, mit einer Medienversorgungseinrichtung (12) zur Bereitstellung/Entsorgung von Medien, die zwischen einer ersten Stellung und einer sich von der ersten Stellung unterscheidenden zweiten Stellung verfahrbar gelagert ist, **dadurch gekennzeichnet, dass** die Medienversorgungseinrichtung (12) derart verfahrbar gelagert ist, dass sie bei Verlagerung zwischen der ersten Stellung und der zweiten Stellung eine überlagerte Bewegung aus einer Translation und einer Rotation durchführt.

2. Medienversorgungsvorrichtung (10) gemäß Anspruch 1, **dadurch gekennzeichnet, dass** die Medienversorgungseinrichtung (12) derart verfahrbar gelagert ist, dass sie bei Verlagerung zwischen der ersten Stellung und der zweiten Stellung zumindest teilweise eine elliptische Bahnkurve beschreibt.

3. Medienversorgungsvorrichtung (10) gemäß Anspruch 1 oder 2, **dadurch gekennzeichnet, dass** die Medierversorgungseinrichtung (12) über eine Getriebeeinrichtung (14) an einer Gestelleinrichtung (16) verfahrbar gelagert ist.

4. Medienversorgungsvorrichtung (10) gemäß Anspruch 3, **dadurch gekennzeichnet, dass** die Getriebeeinrichtung (14) einen ersten Lenker (18) und einen zweiten Lenker (20) umfasst, die jeweils mit einem Ende an der Gestelleinrichtung (16) und einem anderen Ende an der Medienversorgungseinrichtung (12) angelenkt sind,

5. Medienversorgungsvorrichtung (10) gemäß Anspruch 4, **dadurch gekennzeichnet, dass** die Medienversorgungseinrichtung (12) in der ersten Stellung in einer eingefahrenen, vorzugsweise horizontalen Stellung und in der zweiten Stellung in einer ausgefahrenen, vorzugsweise vertikalen Stellung angeordnet ist, wobei der erste und zweite Lenker (18, 20) die Medienversorgungseinrichtung (12) auf einer vorbestimmten Bahnkurve führen,

6. Medienversorgungsvorrichtung (10) gemäß einem der Ansprüche 3 bis 5, **dadurch gekennzeichnet, dass** die Medienversorgungseinrichtung (12) weiterhin über eine Gasdruckfeder (30) mit der Gestelleinrichtung (16) derart verbunden ist, dass die Gasdruckfeder (30) die Medienversorgungseinrichtung (12) bei Überschreiten einer vorbestimmten Position in die erste Stellung anhand deren Federkraft bewegt.

7. Medienversorgungsvorrichtung (10) gemäß Anspruch 6, **dadurch gekennzeichnet, dass** die Gasdruckfeder (30) weiterhin mit einem Dämpfungsmechanismus vorgesehen ist.

8. Medienversorgungsvorrichtung (10) gemäß einem der Ansprüche 3 bis 7, **dadurch gekennzeichnet, dass** die Medienversorgungseinrichtung (12) weiterhin über eine Zugfeder (22) mit der Gestelleinrichtung (16) derart verbunden ist, dass die Zugfeder (22) die Medienversorgungseinrichtung (12) bei Unterschreiten einer vorbestimmten Position in die zweite Stellung anhand deren Federkraft bewegt.

9. Medienversorgungsvorrichtung (10) gemäß einem der Ansprüche 3 bis 8, **dadurch gekennzeichnet, dass** die Gestelleinrichtung (16) von einer Medienverteilereinrichtung (28) in einer Längsrichtung der Medienverteilereinrichtung (28) verfahrbar geführt ist.

10. Medienversorgungsvorrichtung (10) gemäß Anspruch 9, **dadurch gekennzeichnet, dass** eine Arretiereinrichtung vorgesehen ist, die eingerichtet ist, eine Arretierung der Gestelleinrichturig (16) vorzunehmen, um die Verfahrbarkeit der Gestelleinrichtung (16) zu unterbinden, und die Arretierung zu lösen, um die Verfahrbarkeit der Gestelleinrichtung (16) zuzulassen.

11. Medienversorgungsvorrichtung (10) gemäß einem der vorangehenden Ansprüche, **dadurch gekennzeichnet, dass** die Medienversorgungseinrichtung (12) eine zwischen der ersten und zweiten Stellung verfahrbar gelagerte Rahmeneinrichtung (24) und eine entlang einer Längsrichtung der Rahmeneinrichtung (24) verfahrbare Medienentnahmeeinrichtung (26) umfasst.
